# EUROPEAN PATENT APPLICATION

(11) **EP 2 432 200 A1**
(43) Date of publication of application: **21.03.2012**
(21) Application number: 10774731.3
(22) Date of filing: 13.05.2010
(51) Int. Cl.: H04M 1/67, H04M 1/00, H04W 12/00, H04W 64/00

(54) **COMMUNICATION TERMINAL DEVICE AND SECURITY METHOD**

(30) Priority: 13.05.2009 JP 2009116827
(71) Applicant: Panasonic Corporation, Kadoma-shi Osaka 571-8501 (JP)
(72) Inventor: SHIRAISHI, Koichiro, Osaka-shi, Osaka 540-6207 (JP)
(74) Representative: Grünecker, Kinkeldey, Stockmair & Schwanhäusser
(86) International application number: PCT/JP2010/003248
(87) International publication number: WO 2010/131472

(57) **Abstract**

Provided is a communication terminal device which can prevent the situation that the communication terminal device cannot be used for a while within a security area, can release a security lock without making a user aware of the release, and can increase usability. In the device, a GPS unit (105) acquires current position information. By a security setting unit (110), security is released when the position information is within the security area, and security is set when the position information is outside the security area. An information storage unit (104) previously stores a BSI of a base station associated with the security area. A radio unit (102) acquires BSIs of a plurality of base stations. A GPS control unit (108) controls a timing to start acquisition of the position information by the GPS unit (105), on the basis of the BSI stored in the information storage unit (104) and the BSI acquired by the radio unit (102).

## Description

### Technical Field

The present invention relates to a communication terminal apparatus and a security method. In particular, the present invention relates to a communication terminal apparatus and a security method for setting and resetting security, without letting a user aware of enter into and exit from the security area.

### Background Art

Conventionally, a communication terminal apparatus that registers a security area in advance, and, when a signal is generated by, for example, key input, starts the GPS function and acquires positional information, judges whether or not the terminal is in the security area based on the acquired positional information, and, according to the result of the judgment, performs unlocking operation of the security lock, is known (for example, see Patent Literature 1). Then, by unlocking the security lock, it is possible to use the communication terminal apparatus in the security area. According to Patent Literature 1, the GPS function is not started and positional information is not acquired until a signal is generated by, for example, key input, so that it is possible to save power.

### Citation List

### Patent Literature

PTL 1
   Japanese Patent Application Laid-Open No.2008-227758

### Summary of Invention

### Technical Problem

However, in Patent Literature 1, because the GPS function is started and positional information is acquired when the security lock is unlocked, there is a problem that it is not possible to use a communication terminal apparatus for a while in the security area until the security lock is unlocked. Further, Patent Literature 1 has a problem that, if a user does not intentionally perform an operation to unlock the security lock, it is not possible to unlock the security lock, so that the usability is not good.

It is therefore an object of the present invention to provide a communication terminal apparatus and a security method that can prevent a condition where the communication terminal apparatus cannot be used for a while in the security area, and unlock the security lock without letting a user aware of unlocking, by starting the GPS function at a predetermined timing before unlocking the security lock, making it possible to improve the usability.

### Solution to Problem

A communication terminal apparatus according to the present invention employs a configuration to include: an acquisition section that acquires a current positional information; a security section that resets security when the acquired positional information shows that the communication terminal apparatus is in a predetermined area, and sets the security when the acquired positional information shows that the communication terminal apparatus is outside the area; a memory section that memorizes in advance first identification information of a base station that is associated with the area; a radio section that acquires second identification information of a plurality of base stations; and a control section that controls a timing to start acquiring the positional information by the acquisition section, based on the first identification information and the second identification information.

A security method according to the present invention employs a configuration to be a security method in a communication terminal apparatus for setting and resetting security, the method including steps of: acquiring current positional information; resetting security when the acquired positional information shows that the communication terminal apparatus is in a predetermined area, and setting the security when the acquired positional information shows that the communication terminal apparatus is outside the area; memorizing in advance first identification information of a base station that is associated with the area; acquiring second identification information of a plurality of base stations; and controlling a timing to start acquiring the positional information, based on the first identification information and the second identification information.

### Advantageous Effects of Invention

According to the present invention, by starting the GPS function at a predetermined timing before unlocking the security lock, it is possible to prevent a condition where the communication terminal apparatus cannot be used for a while in the security area, and unlock the security lock without letting a user aware of unlocking, making it possible to improve the usability.

### Brief Description of Drawings

FIG.1 is a block diagram showing a configuration of a communication terminal apparatus according to the embodiment of the present invention;
FIG.2 is a flow chart showing a method of registering information to be memorized in an information storage section according to the embodiment of the present invention;
FIG.3 shows a relationship between the security area and each cell in case B according to the embodiment of the present invention;
FIG.4 shows a relationship between the security area and each cell in case C according to the embodiment of the present invention;
FIG.5 is a flow chart showing an operation of the communication terminal apparatus in case A according to the embodiment of the present invention;
FIG.6 shows a timing to start a GPS section in case A according to the embodiment of the present invention;
FIG.7 is a flow chart showing an operation of the communication terminal apparatus in case B according to the embodiment of the present invention;
FIG.8 shows a timing to start a GPS section in case B according to the embodiment of the present invention;
FIG.9 shows a condition where a communication terminal apparatus according to the embodiment of the present invention is moving toward the security area;
FIG.10 shows a condition where a communication terminal apparatus according to the embodiment of the present invention is not moving toward the security area;
FIG.11 is a flow chart showing an operation of the communication terminal apparatus in case C according to the embodiment of the present invention; and
FIG.12 is a flow chart showing an operation of a communication terminal apparatus when a communication terminal apparatus according to the embodiment of the present invention is moving from the inside of the security area to the outside of the security area.

### Description of Embodiments

Now, an embodiment of the present invention will be described in detail with reference to the accompanying drawings.

### (Embodiment)

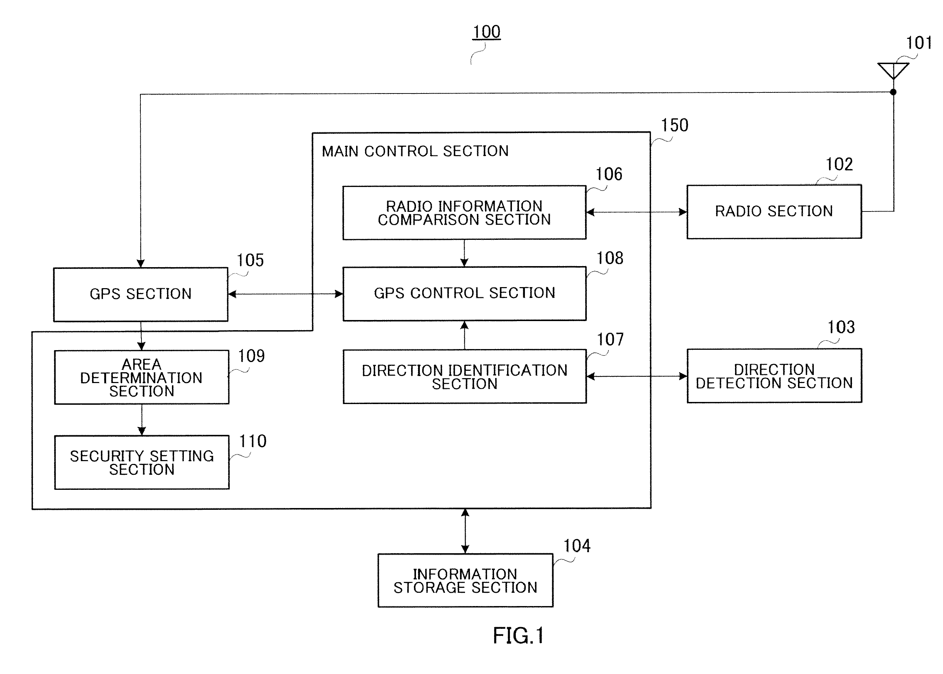

FIG.1 is a block diagram showing a configuration of communication terminal apparatus 100 according to an embodiment of the present invention.

Communication terminal apparatus 100 is mainly configured with antenna 101, radio section 102, direction detection section 103, information storage section 104, global positioning system (GPS) section 105, and main control section 150. Further, main control section 150 includes radio information comparison section 106, direction identification section 107, GPS control section 108, area determination section 109, and security setting section 110. Examples of main control section 150 includes a CPU. Each configuration will be described in detail below.

Antenna 101 receives a signal from a plurality of base stations (not shown), and outputs the reception signal to radio section 102. Further, antenna 101 transmits a transmission signal input from radio section 102. Further, antenna 101 outputs a GPS signal received from a GPS satellite to GPS section 105.

Radio section 102 detects a reception level of the reception signal of each base station that is received from antenna 101. Further, radio section 102 decodes the reception signal of a base station that has a detected reception level of a threshold value or higher, to acquire a BSI (base station index), which is unique to each base station. At this time, radio section 102 acquires the BSIs of the base stations other than the base station having the greatest reception level detected, out of the base stations from which BSIs are acquired, as the BSIs of candidate base stations. Here, a "candidate base station" refers to a base station of a cell adjacent to or a cell neighboring the cell in which communication terminal apparatus 100 is present. Further, radio section 102 outputs the acquired BSIs to radio information comparison section 106. Further, radio section 102 encodes the transmission signal input from radio information comparison section 106, and outputs the encoded signal to antenna 101.

Direction detection section 103 is an acceleration sensor, for example, and detects whether or not communication terminal apparatus 100 is moving, and, when communication terminal apparatus 100 is moving, detects the moving direction.

Information storage section 104 stores the position and size of the security area that are set in advance. Further, information storage section 104 stores timing control information for controlling the timing to acquire the positional information and the BSI by associating the timing control information with the BSI. Here, the position of a security area is the latitude and longitude of the center point of the security area in the case where, for example, the security area is substantially circular. Further, the size of a security area is the radius in the case where, for example, the security area is substantially circular. Further, a security area is a house of a user of communication terminal apparatus 100, for example. Timing control information will be described later.

GPS section 105 acquires the current positional information of communication terminal apparatus 100, based on the GPS signal input from antenna 101, according to the control of GPS control section 108.

Radio information comparison section 106 compares the BSIs input from radio section 102 and the BSI stored in information storage section 104. Then, radio information comparison section 106 outputs the result of the comparison to GPS control section 108.

Direction identification section 107 acquires the detection result in direction detection section 103 from direction detection section 103, and, based on the acquired detection result, determines whether or not communication terminal apparatus 100 is moving, and, if determining that communication terminal apparatus 100 is moving, determines the moving direction. Then, based on the determined moving direction, direction identification section 107 determines whether or not communication terminal apparatus 100 is moving toward the security area, and outputs the determination result to GPS control section 108.

GPS control section 108 controls the timing in which GPS section 105 starts acquiring positional information, based on the comparison result input from radio information comparison section 106 and the determination result input from direction identification section 107.

Area determination section 109 determines whether or not communication terminal apparatus 100 has entered the security area and whether or not communication terminal apparatus 100 has exited the security area, based on the result of comparison of the current positional information acquired from GPS section 105 with the position of the security area stored in information storage section 104. Then, area determination section 109 outputs the determination result to security setting section 110.

Upon receiving as input the "determination result to show that communication terminal apparatus 100 has entered the security area" from area determination section 109, security setting section 110 unlocks the security lock. Further, upon receiving as input the "determination result to show that communication terminal apparatus 100 exits the security area" from area determination section 109, security setting section 110 sets the security lock. The configuration of communication terminal apparatus 100 has been described above.

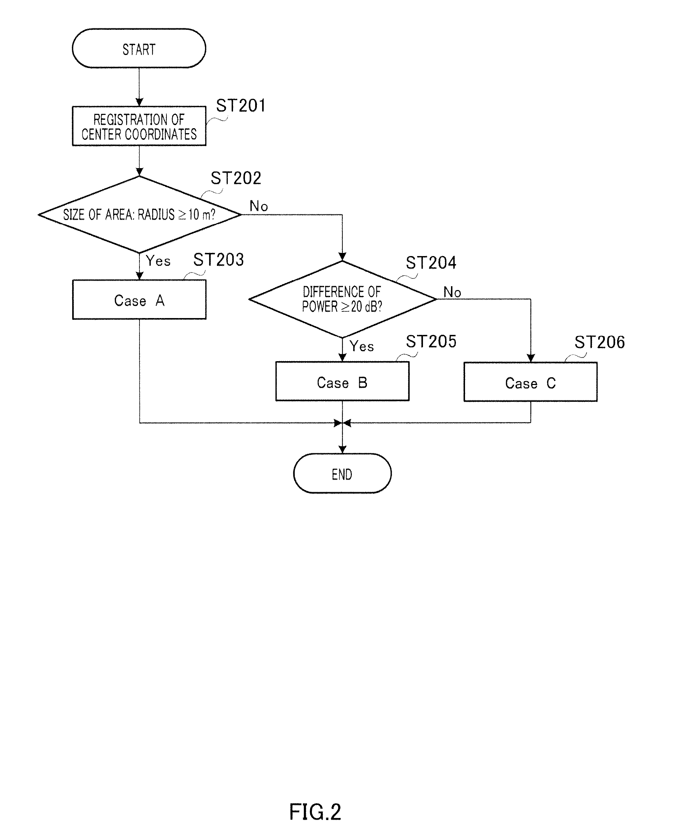

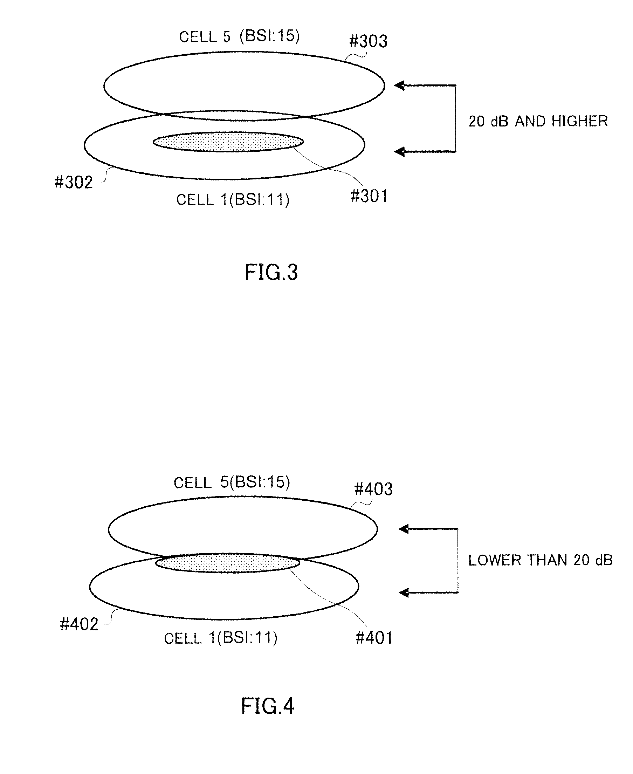

Next, a method of registering information to be memorized in information storage section 104 will be described with reference to FIG.2 to FIG.4. FIG.2 is a flow chart showing a method of registering information to be memorized in information storage section 104. Further, FIG.3 shows a relationship between security area #301 and cell 1 #302 and cell 5 #303 in case B. Further, FIG.4 shows a relationship between security area #401 cell #402 and cell #403 in case C. The processing of FIG.2 is performed, for example, at the initial setting in advance in communication terminal apparatus 100.

First, information storage section 104 registers the center coordinates of each security area (step ST 201). Further, information storage section 104 registers the size of a security area. Here, the center coordinates of a security area is the latitude and the longitude, for example, and the size of a security area is the radius of the security area.

Then, when the radius of a security area is 10 m or greater (step ST 202: Yes), the BSI of the base station having the highest reception level acquired by radio section 102 is registered by associating that BSI with case A (timing control information), and is memorized in information storage section 104 (step ST 203). In case A, when the BSI memorized in information storage section 104 matches the BSI of the candidate base station acquired by radio section 102, GPS section 105 starts acquiring the positional information.

Further, in the case where the radius of the security area is shorter than 10 m (step ST 202: No), when, out of the base stations of BSIs acquired by radio section 102, the difference of reception level between the base station having the highest reception level and base stations other than that base station is 20 dB or higher (step ST 204: Yes), the BSI of the base station having the highest reception level acquired by radio section 102 is registered by associating that BSI with case B (timing control information), and is memorized in information storage section 104 (step ST 205).

As shown in FIG.3, in case B, it is possible to judge that set security area #301 does not bridge across a plurality of cells of cell 1 #302 and cell 5 #303. Therefore, in this case, when the BSI (for example, BSI 11) memorized in information storage section 104 matches the BSI of the base station having the highest reception level acquired by radio section 102, communication terminal apparatus 100 starts acquiring positional information by GPS section 105.

Further, in the case where the radius of the security area is shorter than 10 m (step ST 202: No), when, out of the BSIs acquired by radio section 102, the difference of reception level between the base station having the highest reception level and base stations other than that base station is lower than 20 dB (step ST 204: No), the BSI of the base station having the highest reception level acquired by radio section 102 and the BSI having the reception level difference from the highest level is lower than 20 dB is registered by associating that BSI with case C (timing control information), and is memorized in information storage section 104 (step ST 206).

As shown in FIG.4, in case C, it is possible to judge that set security area #401 is likely to bridge across a plurality of cells of cell 1 #402 and cell 5 #403. Therefore, in this case, when a plurality of BSIs (for example, BSI 1 1 and BSI 15) memorized in information storage section 104 match two BSIs (for example, BSI 11 of cell 1 #402 and BSI 15 of cell 5 #403) that are selected sequentially in order from a higher reception level acquired by radio section 102, communication terminal apparatus 100 starts acquiring positional information by GPS section 105. The method of registering information to be memorized in information storage section 104 has been described above.

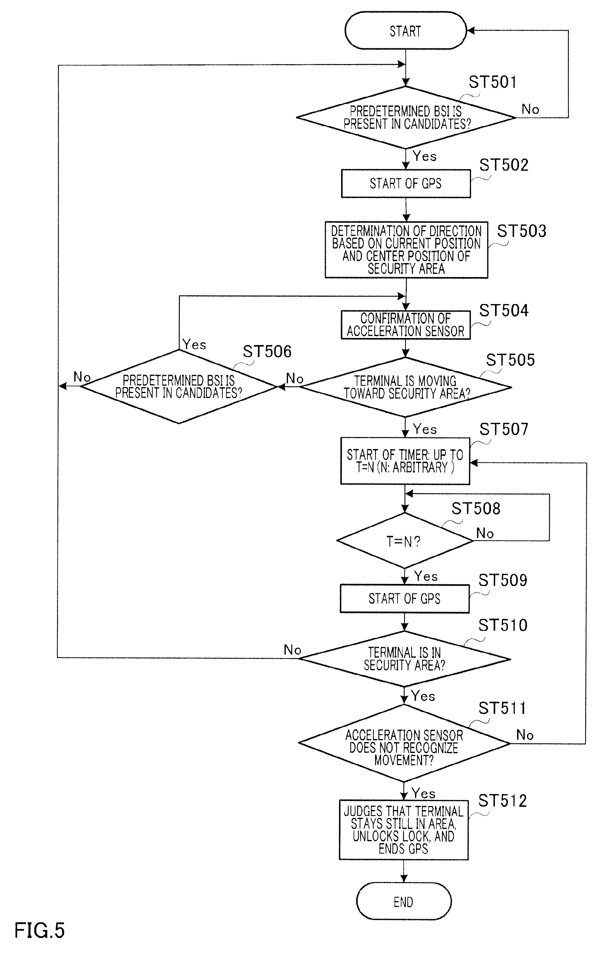

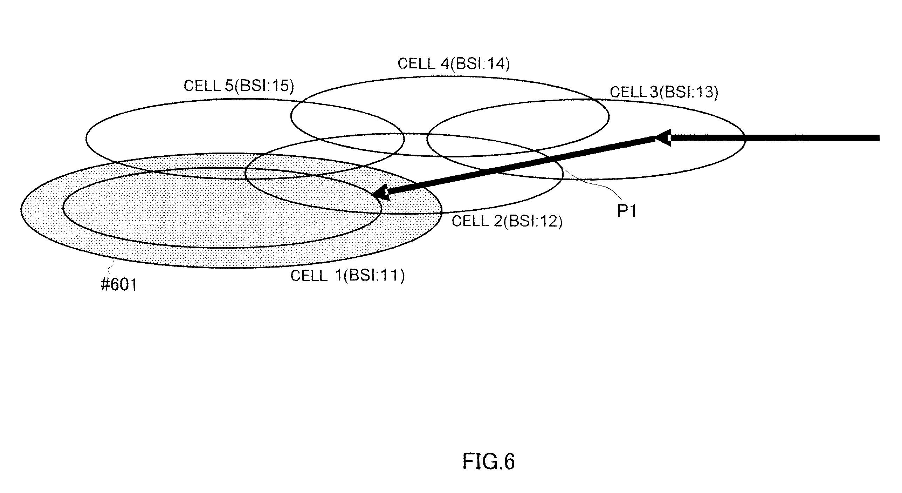

Next, an operation of communication terminal apparatus 100 when timing control information is case A, will be described with reference to FIG.5 and FIG.6. FIG.5 is a flow chart showing an operation of communication terminal apparatus 100 when timing control information is case A. Further, FIG.6 shows a timing to start GPS section 105 when timing control information is case A.

First, radio information comparison section 106 compares the B SI of the candidate base station acquired from radio section 102 and the BSI memorized in information storage section 104, to determine whether or not the BSI of the candidate base station is present among the BSIs memorized in information storage section 104 (step ST 501).

When a BSI to match the acquired BSI of the candidate base station is not present among the BSIs memorized in information storage section 104 (step ST 501 : No), the processing of step ST 501 is repeated.

Further, when a BSI to match the acquired BSI of the candidate base station is present among the BSIs memorized in information storage section 104 (step ST 501: Yes), GPS control section 108 controls GPS section 105 to start acquiring positional information (step ST 502).

Next, direction identification section 107 determines the moving direction based on the current position and the center coordinates of the security area (step ST 503).

Next, direction identification section 107 acquires and confirms the detection result of direction detection section 103 such as an acceleration sensor (step ST 504).

Next, direction identification section 107 determines whether or not communication terminal apparatus 100 is moving toward the security area (step ST 505).

Upon determining that communication terminal apparatus 100 is not moving toward the security area (step ST 505: No), radio information comparison section 106 compares the BSI of the candidate base station acquired from radio section 102 and the BSIs memorized in information storage section 104, to determine whether or not the BSI of the candidate base station is present among the BSIs memorized in information storage section 104 (step ST 506).

When a BSI to match the acquired BSI of the candidate base station is not present among the BSIs memorized in information storage section 104 (step ST 506: No), the processing is returned to step ST 501.

On the other hand, when a BSI to match the acquired BSI of the candidate base station is present among the BSIs memorized in information storage section 104 (step ST 506: Yes), the processing is returned to step ST 504.

Further, upon determining that communication terminal apparatus 100 is moving toward the security area (step ST 505: Yes), GPS control section 108 starts the timer and performs measurement up to T=N (N is an arbitrary positive number) (step ST 507).

Next, GPS control section 108 determines whether or not T=N is satisfied (step ST 508).

When T=N is not satisfied (step ST 508: No), the processing of step ST 508 is repeated.

On the other hand, when T=N is satisfied (step ST 508: Yes), GPS control section 108 starts GPS section 105 (step ST 509).

Next, area determination section 109 determines whether or not communication terminal apparatus 100 has entered the security area, based on the result of the comparison of the positional information acquired from GPS section 105 with the position of the security area memorized in information storage section 104 (step ST 510).

Upon determining that communication terminal apparatus 100 has not entered the security area (step ST 510: No), the processing is returned to step ST 501.

On the other hand, upon determining that communication terminal apparatus 100 has entered the security area (step ST 510: Yes), direction identification section 107 determines whether or not direction detection section 103 detects movement (step ST 51 1).

When direction detection section 103 detects movement (step ST 511: No), the processing is returned to step ST 507.

On the other hand, when direction detection section 103 does not detect movement (step ST 511: Yes), security setting section 110 judges that communication terminal apparatus 100 stays still in the security area and unlocks the security clock, and GPS section 105 ends acquisition of positional information (step ST 512).

In the above processing, with reference to FIG.6, information storage section 104 memorizes in advance BSI 11 of cell 1 that is associated with security area #601. Further, when communication terminal apparatus 100 reaches edge P1 of cell 2, radio section 102 acquires BSI 13, BSI 14, BSI 15, and BSI 11 of candidate base stations (cell 3, cell 4, cell 5, and cell 1). At this time, GPS control section 108 acquires the comparison result in which BSI 11 memorized in information storage section 104 matches BSI 11 of the candidate base station acquired by radio section 102, from radio information comparison section 106. Therefore, GPS control section 108 starts GPS section 105 and starts acquiring the positional information by GPS section 105, in edge P1 of cell 2. By this means, when entering security area #601, communication terminal apparatus 100 can immediately start communication. The operation of communication terminal apparatus 100 when timing control information is case A, has been described above.

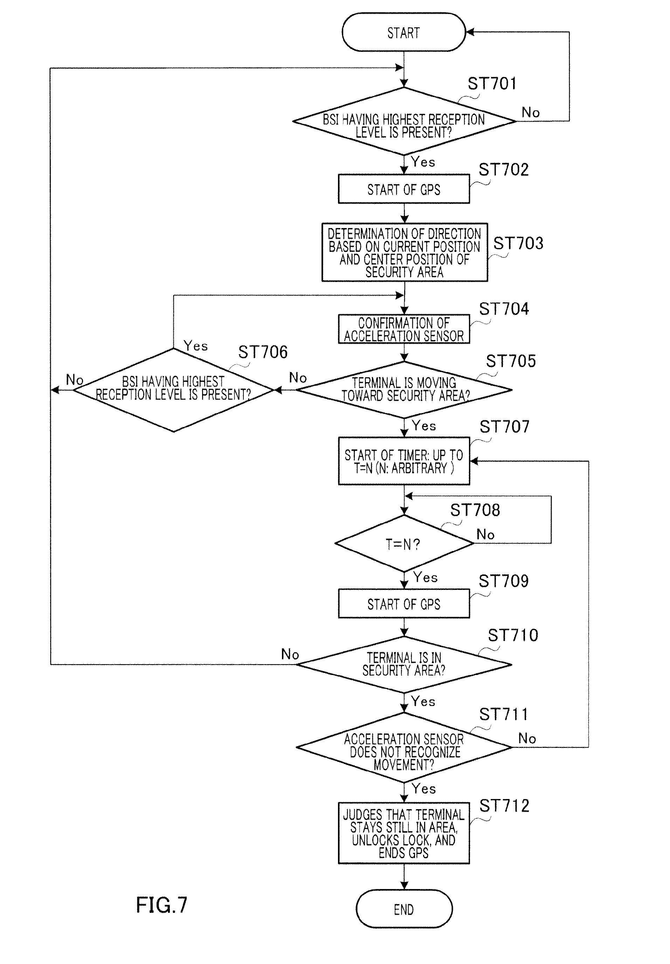

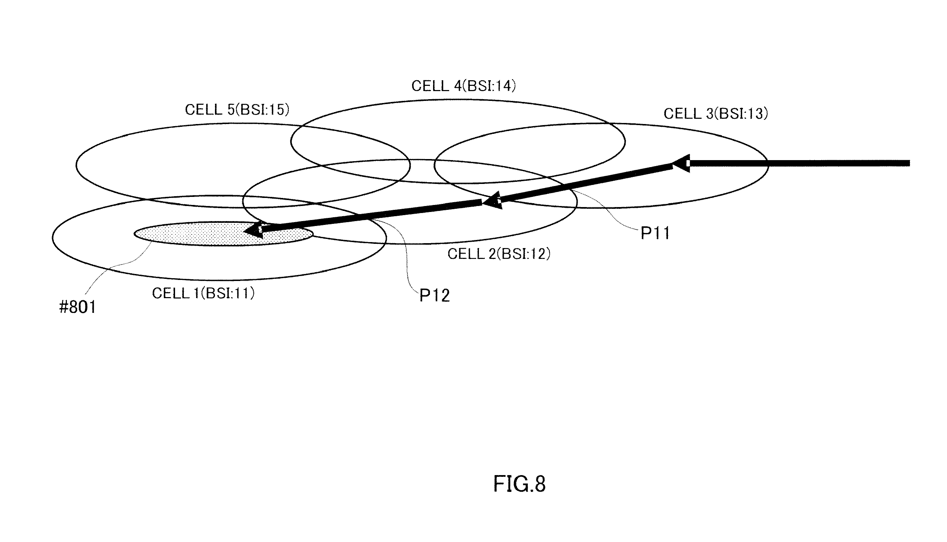

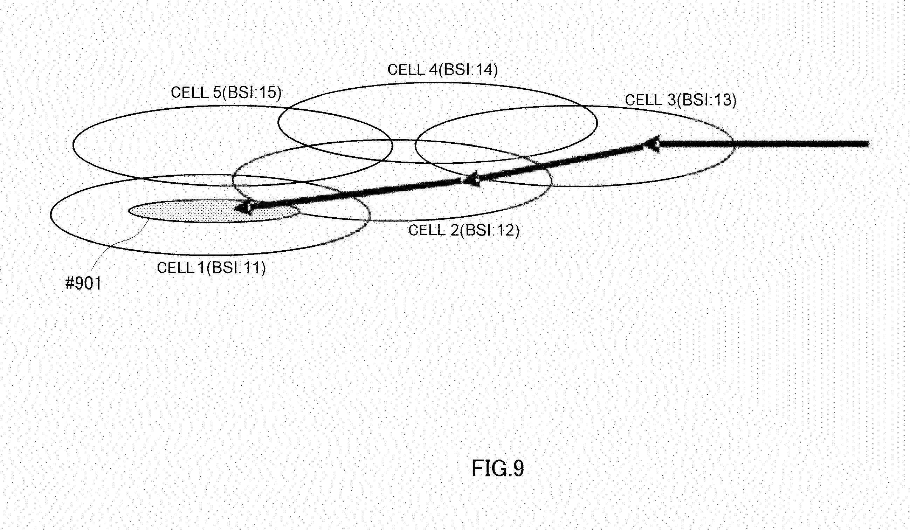

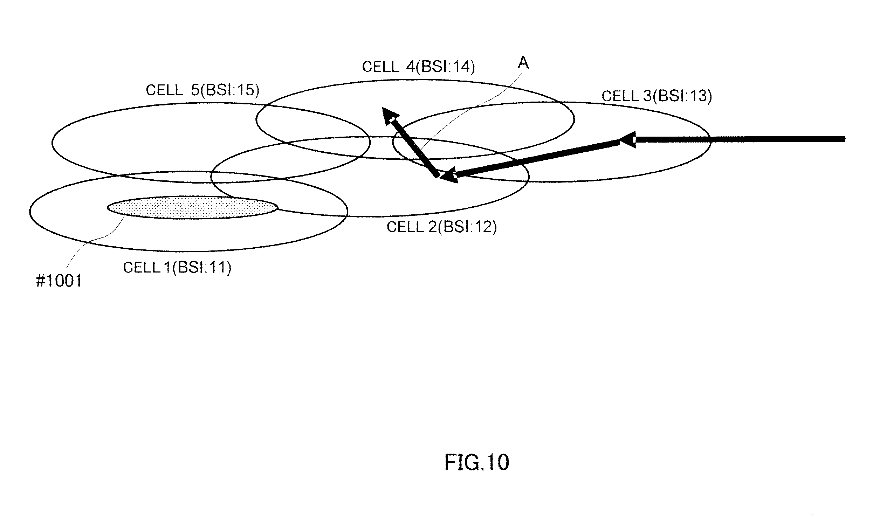

Next, an operation of communication terminal apparatus 100 when timing control information is case B, will be described with reference to FIG.7 to FIG.10. FIG.7 is a flow chart showing an operation of communication terminal apparatus 100 when the timing control information is case B. Further, FIG.8 shows the timing to start GPS section 105 when the timing control information is case B. Further, FIG.9 shows a condition where communication terminal apparatus 100 is moving toward the security area, and FIG.10 shows a condition where communication terminal apparatus 100 is not moving toward the security area.

First, radio information comparison section 106 compares the BSI of the base station having the highest reception level that is acquired from radio section 102 and the BSIs memorized in information storage section 104, to determine whether or not the BSI of the base station having the highest reception level is present among the BSIs memorized in information storage section 104 (step ST 701).

When the BSI of the base station having the highest reception level is not present (step ST 701: No), the processing of step ST 701 is repeated.

Further, when the BSI of the base station having the highest reception level is present (step ST 701: Yes), GPS control section 108 controls GPS section 105 so as to start acquiring positional information (step ST 702).

Next, direction identification section 107 determines the moving direction based on the current position and the center coordinates of the security area (step ST 703).

Next, direction identification section 107 acquires and confirms the detection result of direction detection section 103 such as an acceleration sensor (step ST 704).

Next, direction identification section 107 determines whether or not communication terminal apparatus 100 is moving toward the security area (step ST 705).

Upon determining that communication terminal apparatus 100 is not moving toward the security area (step ST 705: No), radio information comparison section 106 compares the BSI of the base station having the highest reception level that is acquired from radio section 102 and the BSIs memorized in information storage section 104, to determine whether or not the BSI of the base station having the highest reception level is present among the BSIs memorized in information storage section 104 (step ST 706).

When a BSI of the base station having the highest reception level is not present (step ST 706: No), the processing is returned to step ST 701.

On the other hand, when the BSI of the base station having the highest reception level is present (step ST 706: Yes), the processing is returned to step ST 704.

Further, upon determining that communication terminal apparatus 100 is moving toward the security area (step ST 705: Yes), GPS control section 108 starts the timer and performs measurement up to T=N (N is an arbitrary positive number) (step ST 707).

Next, GPS control section 108 determines whether or not T=N is satisfied (step ST 708).

When T=N is not satisfied (step ST 708: No), the processing of step ST 708 is repeated.

On the other hand, when T=N is satisfied (step ST 708: Yes), GPS control section 108 starts GPS section 105 (step ST 709).

Next, area determination section 109 determines whether or not communication terminal apparatus 100 has entered the security area, based on the result of comparison of the positional information acquired from GPS section 105 with the position of the security area memorized in information storage section 104 (step ST 710).

Upon determining that communication terminal apparatus 100 has not entered the security area (step ST 710: No), the processing is returned to step ST 701.

On the other hand, upon determining that communication terminal apparatus 100 has entered the security area (step ST 710: Yes), direction identification section 107 determines whether or not direction detection section 103 detects movement (step ST 711).

When direction detection section 103 detects movement (step ST 711: No), the processing is returned to step ST 707.

On the other hand, when direction detection section 103 does not detect movement (step ST 711: Yes), security setting section 110 judges that communication terminal apparatus 100 stays still in the security area and unlocks the security clock, and GPS section 105 finishes acquiring positional information (step ST 712).

In the above processing, with reference to FIG.8, information storage section 104 memorizes in advance BSI 11 of cell 1 that is associated with security area #801. Further, when communication terminal apparatus 100 reaches edge P11 of cell 2, radio section 102 acquires BSI 12 of the base station having the highest reception level (cell 2), and BSI 13, BSI 14, BSI 15, and BSI 11 of candidate base stations (cell 3, cell 4, cell 5, and cell 1). However, because a BSI to match BSI 11 memorized in information storage section 104 is BSI 11 of the candidate base station acquired by radio section 102, GPS control section 108 does not start GPS section 105. Further, when communication terminal apparatus 100 reaches edge P12 of cell 1, radio section 102 acquires BSI 11 of the base station having the highest reception level (cell 1). At this time, GPS control section 108 acquires the comparison result in which BSI 11 memorized in information storage section 104 matches BSI 11 of the base station having the highest reception level that is acquired by radio section 102, from radio information comparison section 106. Therefore, GPS control section 108 starts GPS section 105 and starts acquiring positional information by GPS section 105, in edge P12 of cell 1. By this means, when entering security area #801, communication terminal apparatus 100 can immediately start communication. Further, because communication terminal apparatus 100 does not start GPS section 105 until the terminal moves to edge P12 of cell 1, it is possible to save power.

FIG.9 shows a case where communication terminal apparatus 100 moves to security area #901 in cell 1 via cell 3 and cell 2. That is, FIG.9 shows a condition where communication terminal apparatus 100 is moving toward security area #901. On the other hand, FIG.10 shows a case where communication terminal apparatus 100 moves to cell 4 that is not associated with security area #1001, via cell 3 and cell 2. That is, FIG.10 shows a condition where communication terminal apparatus 100 is moving, not toward security area #1001. GPS control section 108 starts GPS section 105 in the case of FIG.9, and does not start GPS section 105 in the case of FIG.10. That is, when direction detection section 103 detects that communication terminal apparatus 100 is moving toward direction A, GPS control section 108 does not start GPS section 105. The operation of communication terminal apparatus 100 when timing control information is case B has been described above.

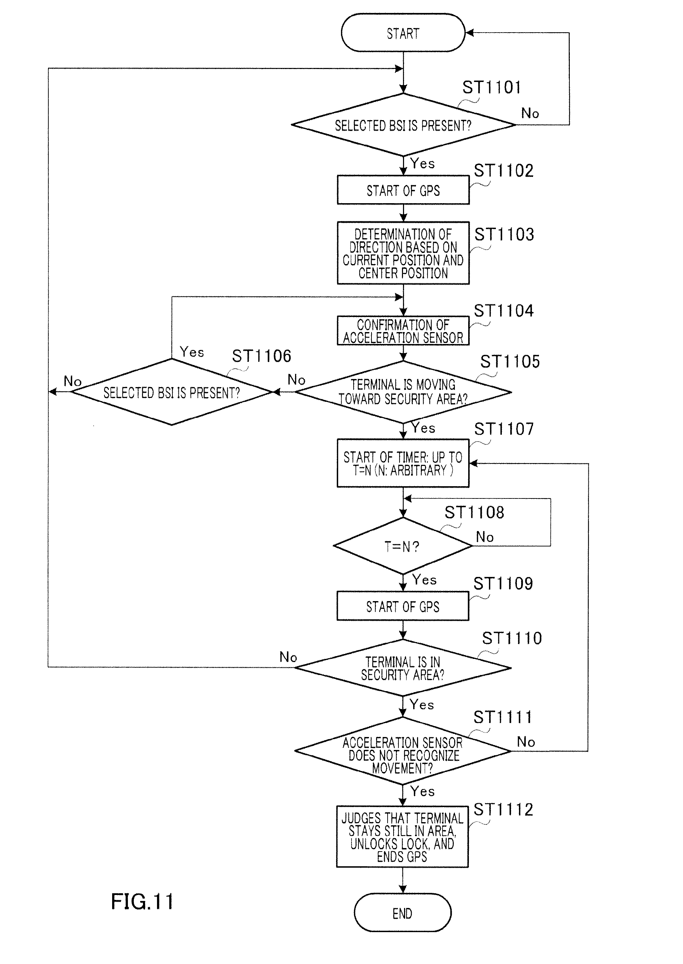

Next, an operation of communication terminal apparatus 100 when timing control information is case C, will be described with reference to FIG.11. FIG. 11 is a flow chart showing an operation of communication terminal apparatus 100 when the timing control information is case C.

First, radio information comparison section 106 compares the BSIs of a plurality of base stations that are selected in order from the base station having a higher reception level that is acquired from radio section 102, and the BSI memorized in information storage section 104, to determine whether or not the BSIs of a plurality of base stations selected are present among the BSIs memorized in information storage section 104 (step ST 1101).

When the BSIs of a plurality of base stations selected are not present among the BSIs memorized in information storage section 104 (step ST 1101: No), the processing of step ST 1101 is repeated.

Further, when the BSIs of a plurality of base stations selected are present among the BSIs memorized in information storage section 104 (step ST 1101: Yes), GPS control section 108 controls GPS section 105 to start acquiring the positional information (step ST 1102).

Next, direction identification section 107 determines the moving direction based on the current position and the center coordinates of the security area (step ST 1103).

Next, direction identification section 107 acquires and confirms the detection result of direction detection section 103 such as an acceleration sensor (step ST 1104).

Next, direction identification section 107 determines whether or not communication terminal apparatus 100 is moving toward the security area (step ST 1105).

Upon determining that communication terminal apparatus 100 is not moving toward the security area (step ST 1105: No), radio information comparison section 106 compares the BSIs of a plurality of base stations that are selected in order from the base station having a higher reception level that are acquired from radio section 102, with the BSIs memorized in information storage section 104, to determine whether or not the BSIs of a plurality of base stations selected are present among the BSIs memorized in information storage section 104 (step ST 1106).

When the BSIs of a plurality of base stations selected are not present among the BSIs memorized in information storage section 104 (step ST 1106: No), the processing is returned to step ST 1101.

On the other hand, when the BSIs of a plurality of base stations selected are present among the BSIs memorized in information storage section 104 (step ST 1106: Yes), the processing is returned to step ST 1104.

Further, upon determining that communication terminal apparatus 100 is moving toward the security area (step ST 1105: Yes), GPS control section 108 starts the timer and performs measurement up to T=N (N is an arbitrary positive number) (step ST 1107).

Next, GPS control section 108 determines whether or not T=N is satisfied (step ST 1108).

When T=N is not satisfied (step ST 1108: No), the processing of step ST 1108 is repeated.

On the other hand, when T=N is satisfied (step ST 1108: Yes), GPS control section 108 starts GPS section 105 (step ST 1109).

Next, area determination section 109 determines whether or not communication terminal apparatus 100 has entered the security area, based on the result of comparison of the positional information acquired by GPS section 105 with the position of the security area memorized in information storage section 104 (step ST 1110).

Upon determining that communication terminal apparatus 100 has not entered the security area (step ST 1110: No), the processing is returned to step ST 1101.

On the other hand, upon determining that communication terminal apparatus 100 has entered the security area (step ST 1110: Yes), direction identification section 107 determines whether or not direction detection section 103 detects movement (step ST 1111).

When direction detection section 103 detects movement (step ST 1111: No), the processing is returned to step ST 1107.

On the other hand, when direction detection section 103 does not detect movement (step ST 1111: Yes), security setting section 110 judges that communication terminal apparatus 100 stays still in the security area and unlocks the security clock, and GPS section 105 finishes acquiring the positional information (step ST 1112). The operation of communication terminal apparatus 100 when timing control information is case C, has been described above.

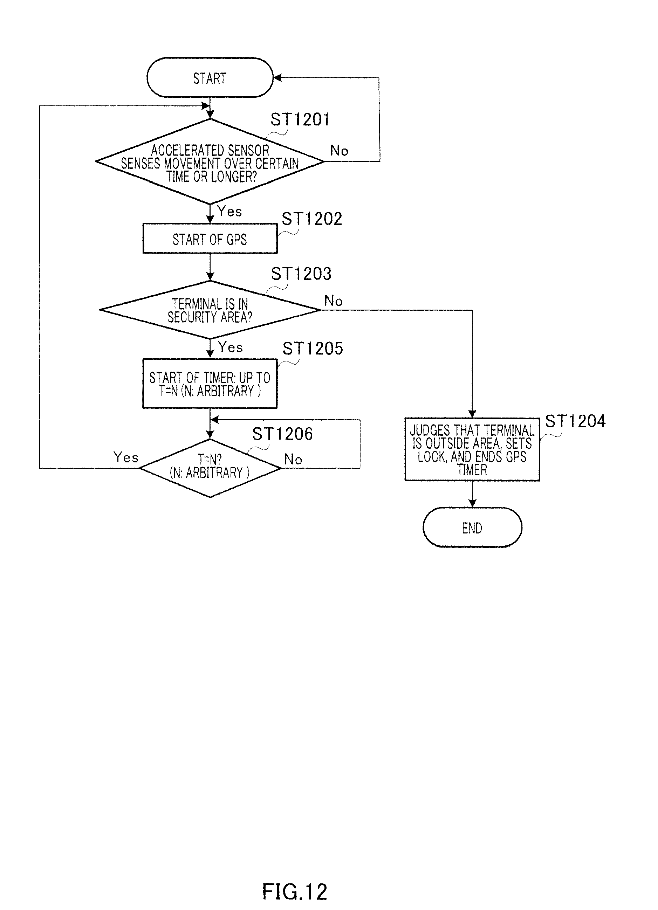

Next, an operation of communication terminal apparatus 100 when communication terminal apparatus 100 moves from the inside of the security area to the outside of the security area, will be described with reference to FIG.12. FIG.12 is a flow chart showing the operation of communication terminal apparatus 100 when communication terminal apparatus 100 moves from the inside of the security area to the outside of the security area.

First, direction identification section 107 determines whether or not direction detection section 103, such as an acceleration sensor, detects movement over a predetermined time or longer (step ST 1201).

When movement over a predetermined time or longer is not detected (step ST 1201: No), the processing of step ST 1201 is repeated.

When movement over a predetermined time or longer is detected (step ST 1201: Yes), GPS control section 108 starts GPS section 105 (step ST 1202).

Next, area determination section 109 determines whether or not communication terminal apparatus 100 is in the security area, based on the positional information acquired by GPS section 105 (step ST 1203).

When communication terminal apparatus 100 is not in the security area (step ST 1203: No), security setting section 110 sets the security lock (step ST 1204).

When communication terminal apparatus 100 is in the security area (step ST 1203: Yes), GPS control section 108 starts the timer and performs measurement up to T=N (N is an arbitrary positive number) (step ST 1205).

Next, GPS control section 108 determines whether or not T=N is satisfied (step ST 1206).

When T=N is not satisfied (step ST 1206: No), the processing of step ST 1206 is repeated.

On the other hand, when T=N is satisfied (step ST 1206: Yes), the processing is returned to step ST 1201.

As described above, according to the present embodiment, by starting the GPS function at a predetermined timing before unlocking the security lock, it is possible to prevent a condition where a communication terminal apparatus cannot be used in the security area for a while, and unlock the security lock without letting a user aware of unlocking, making it possible to improve the usability. Further, according to the present embodiment, by changing the timing to start the GPS section depending on the size of the security area, it is possible to reduce power consumption.

Although a case has been described with the present embodiment where timing to start the GPS section are changed depending on whether the cell radius is 10 m or greater or the cell radius is shorter than 10 m, the present invention is not limited to this, and it is also possible to change the timing to start the GPS section depending on whether the cell radius is not 10 m and is equal to an arbitrary value or greater, or the cell radius is shorter than that arbitrary value. Although a case has been described with the present embodiment where the size of the security area is changed depending on whether the difference of the reception level between the base station having the highest reception level and the base stations other than that base station is 20 dB or higher or the reception level difference is lower than 20 dB, the present invention is not limited to this, and it is also possible to change the size of the security size depending on whether the reception level difference is not 20 dB and is equal to an arbitrary value or higher, or the reception level difference is lower than that arbitrary value. Further, although a case has been described with the above embodiment where the timing to start the GPS section is changed depending on whether the size of the security area is larger than a cell or the size of the security area is smaller than the cell, the present invention is not limited to this, and it is also possible to change the timing to start the GPS section depending on the size of the security area, whether or not the size of the security area is larger than the size of a cell. Although a case has been described with the above embodiment where the timing to start the GPS section is controlled using a BSI, the present invention is not limited to this, and it is possible to control the timing to start the GPS section using an arbitrary identification information, other than a BSI, with which each base station can be identified.

The disclosure of Japanese Patent Application No. 2 009-116827, filed on May 13, 2009, including the specification, drawings and abstract, is incorporated herein by reference in its entirety.

### Industrial Applicability

A communication terminal apparatus and a security method according to the present invention are suitable in particular for setting and resetting the security, without letting a user aware of enter into and exit from the security area.

## Claims

1. A communication terminal apparatus comprising:
an acquisition section that acquires a current positional information;
a security section that resets security when the acquired positional information shows that the communication terminal apparatus is in a predetermined area, and sets the security when the acquired positional information shows that the communication terminal apparatus is outside the area;
a memory section that memorizes in advance first identification information of a base station that is associated with the area;
a radio section that acquires second identification information of a plurality of base stations; and
a control section that controls a timing to start acquiring the positional information by the acquisition section, based on the first identification information and the second identification information.

2. The communication terminal apparatus according to claim 1, wherein:
the radio section acquires the second identification information of the base station having a reception level of a threshold value or higher; and
the control section starts acquiring the positional information when the second identification information of the base station other than a base station having the highest reception level matches the first identification information, in a case where a size of the area is a predetermined value or larger, and starts acquiring the positional information when the second identification information of the base station having the highest reception level matches the first identification information, in a case where the size of the area is smaller than the predetermined value.

3. The communication terminal apparatus according to claim 1, further comprising a detection section that detects a moving direction;
wherein the control section controls the timing when the detected moving direction is a direction to move toward the area.

4. A security method in a communication terminal apparatus for setting and resetting security, the method comprising steps of:
acquiring current positional information;
resetting security when the acquired positional information shows that the communication terminal apparatus is in a predetermined area, and setting the security when the acquired positional information shows that the communication terminal apparatus is outside the area;
memorizing in advance first identification information of a base station that is associated with the area;
acquiring second identification information of a plurality of base stations; and
controlling a timing to start acquiring the positional information, based on the first identification information and the second identification information.
